(19) Europäisches Patentamt
European Patent Office
Office européen des brevets

(11) Veröffentlichungsnummer : **0 333 656 B1**

(12) # EUROPÄISCHE PATENTSCHRIFT

(45) Veröffentlichungstag der Patentschrift :
**28.04.93 Patentblatt 93/17**

(51) Int. Cl.$^5$ : **C09B 62/018,** D06P 1/38

(21) Anmeldenummer : **89810179.5**

(22) Anmeldetag : **08.03.89**

(54) **Reaktivfarbstoffe, Verfahren zu deren Herstellung und deren Verwendung.**

Die Akte enthält technische Angaben, die nach dem Eingang der Anmeldung eingereicht wurden und die nicht in dieser Patentschrift enthalten sind.

(30) Priorität : **17.03.88 CH 1003/88**

(43) Veröffentlichungstag der Anmeldung :
**20.09.89 Patentblatt 89/38**

(45) Bekanntmachung des Hinweises auf die Patenterteilung :
**28.04.93 Patentblatt 93/17**

(84) Benannte Vertragsstaaten :
**BE CH DE ES FR GB IT LI**

(56) Entgegenhaltungen :
**EP-A- 0 210 951**
**FR-A- 2 295 090**
**US-A- 4 024 123**

(73) Patentinhaber : **CIBA-GEIGY AG**
**Klybeckstrasse 141**
**CH-4002 Basel (CH)**

(72) Erfinder : **Begrich, Rainer, Dr.**
**Habsburgerstrasse 32**
**CH-4310 Rheinfelden (CH)**

EP 0 333 656 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Reaktivfarbstoffe werden in grossem Umfang für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in bezug auf Eignung für bestimmte Färbeverfahren und Echtheitsniveau der Färbungen, vielfach nicht voll befriedigen.

Das gilt auch für Reaktivfarbstoffe für den Textildruck. Das vorhandene Angebot an qualitativ hochwertigen Druckfarbstoffen ist, besonders unter Berücksichtigung der Nuance, allgemein noch lückenhaft. Die Bereitstellung weiterer verbesserter Reaktivfarbstoffe ist daher dringend erwünscht.

Kupferformazan-Farbstoffe mit der Grundstruktur der nachfolgenden Formel (1) sind bereits aus der US-A-4024123 bekannt, wobei jedoch im Chlortriazinylrest Y der Formel (2) andere Substituenten vorgesehen sind. Genannt ist z.B. das 2,4-Dichlor-6-methylamino-s-triazin, aus dem der Substituent Y gebildet werden kann.

Aus der EP-A-210951 sind schliesslich bereits Kupferformazan-Farbstoffe bekannt, die Reaktivgruppen mit einem Sulfonbrückenglied ($-SO_2-$) enthalten und an die Formazanstruktur über eine Carbonylgruppe (-CO-) und nicht über eine Aminogruppe (-NH-) gebunden sind.

Der vorliegenden Erfindung liegt die Aufgabe zugrunde, neue Reaktivfarbstoffe zu finden, die besonders für das Bedrucken von textilen Fasermaterialien geeignet sind. Die Farbstoffe sollten einen hohen Fixiergrad und zugleich eine gute Auswaschbarkeit der nichtfixierten Anteile haben, ferner allgemein gute Echtheiten und insbesondere blaue Farbtöne besitzen. Es hat sich gezeigt, dass die weiter unten definierten neuen Farbstoffe die gestellte Aufgabe weitgehend erfüllen.

Gegenstand der Erfindung sind Reaktivfarbstoffe der Formel

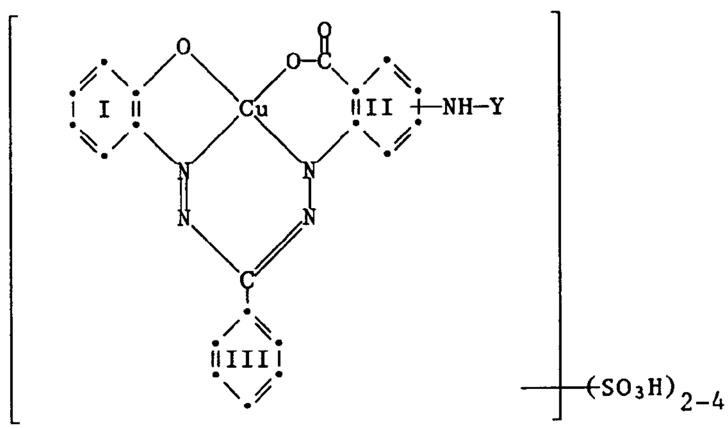

(1),

worin Y ein Rest der Formel

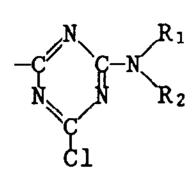

(2)

oder

$$-CO-A-SO_2-X \quad (3),$$

$R_1$ und $R_2$ unabhängig voneinander Wasserstoff oder $C_{1-4}$-Alkyl sind, substituiert durch Halogen, Cyan, $C_{1-4}$-Alkoxy, N,N-Di-$C_{1-4}$-alkylamino, Hydroxy, Carboxy, Sulfo oder Sulfato; A ein gegebenenfalls substituiertes aliphatisches oder aromatisches Brückenglied und X β-Sulfatoäthyl, β-Thiosulfatoäthyl, β-Phosphatoäthyl, β-Acyloxyäthyl, β-Halogenäthyl oder Vinyl ist, die Benzolreste I, II und III ausser 2 bis 4 Sulfogruppen bzw. dem Rest -NH-Y im Benzolrest II weitere Substituenten enthalten können; und die Reaktivfarbstoffe der Formel (1) nur einen einzigen faserreaktiven Rest enthalten.

Als Substituenten $R_1$ und $R_2$ in den Chlor-1,3,5-triazinylresten Y der Formel (2) kommen in Betracht: Was-

serstoff, $C_{1-4}$-Alkyl substituiert mit Halogen, wie Fluor, Chlor und Brom, Cyan, $C_{1-4}$-Alkoxy, N,N-Di-$C_{1-4}$-alkylamino, Hydroxy, Carboxy, Sulfo oder Sulfato. Als Beispiele für derartige Aminogruppen seien genannt: $-NH_2$, β-Methoxyäthylamino, γ-Methoxypropylamino, β-Aethoxyäthylamino, β-Chloräthylamino, β-Cyanäthylamino, γ-Cyanpropylamino, β-Carboxyäthylamino, Sulfomethylamino, β-Sulfoäthylamino, N-Methyl-N-β-sulfoäthylamino, N-Aethyl-N-β-sulfoäthylamino, β-Hydroxyäthylamino, N,N-Di-β-hydroxyäthylamino, β-Sulfatoäthylamino, γ-Hydroxypropylamino, 3-(N,N-Dimethylamino)-propylamino, Carboxymethylamino, Cyclohexylamino, β-Hydroxyäthylsulfonyläthoxyäthylamino.

Das aliphatische oder aromatische Brückenglied A im Rest der Formel (3) ist vorzugsweise ein Alkylen- oder Arylenrest. So kann A ein langer (z.B. mit 10 oder mehr Kohlenstoffatomen) oder kürzerer, geradkettiger oder verzweigter, cyclischer oder bicyclischer Alkylenrest sein; insbesondere kommt ein Alkylenrest mit 2 bis 6 Kohlenstoffatomen in Betracht, z.B. Aethylen, Propylen, Butylen, Hexylen, Cyclohexylen oder Endomethylencyclohexylen. Als Arylenrest ist A z.B. ein Naphthylenrest, der Rest eines Diphenyls oder Stilbens oder insbesondere ein Phenylenrest. Der Rest A kann weitere Substituenen enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. Vorzugsweise ist A $C_{2-6}$-Alkylen oder Phenylen. Bevorzugt ist der Phenylen-, Propylen- oder Endomethylencyclohexylenrest.

Als β-Acyloxyäthyl kommt für X insbesondere der β-Acetoxyäthylrest und als β-Halogenäthyl insbesondere der β-Chloräthylrest in Betracht.

Als Beispiele für weitere Substituenten an den Benzolresten I, II und III seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, insbesondere $C_{2-6}$-Alkanoylaminogruppen wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Als Substituenten kommen vor allem Methyl, Aethyl, Methoxy, Aethoxy, Acetylamino, Benzoylamino, Amino, Chlor, Brom, Ureido, Hydroxy, Carboxy, Sulfomethyl oder Sulfo in Betracht. Vorzugsweise enthalten die Benzolreste I, II und III nur Sulfogruppen. Die Benzolreste I, II und III enthalten zusammen 2 bis 4 Sulfogruppen.

Bevorzugt sind:

(a) Reaktivfarbstoffe der Formel (1), worin Y ein Rest der Formel

$$-CO-A-SO_2-CH_2CH_2-Cl \qquad (3a)$$

ist, worin A n-Propylen, Phenylen oder Endomethylencyclohexylen ist.

(b) Reaktivfarbstoffe der Formel (1), worin die Benzolreste I, II und III keine weiteren Substituenten enthalten.

Besonders bevorzugt ist der Reaktivfarbstoff der Formel

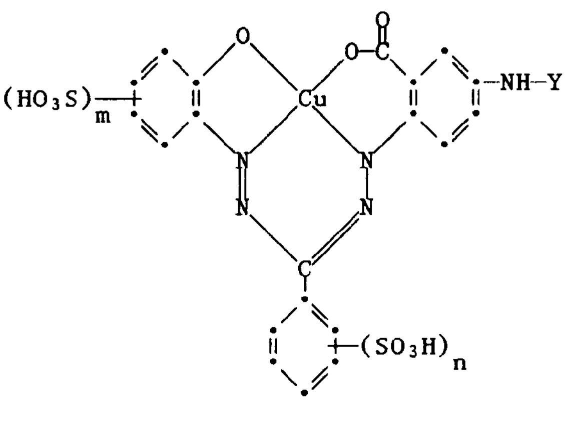

(4),

worin Y die unter Formel (1) angegebene Bedeutung hat, m die Zahl 1 oder 2 und n die Zahl 0, 1 oder 2 ist

und m+n = 2, 3 oder 4 ist.

Als besonders bevorzugte Reaktivfarbstoffe der Formel (4) kommen solche der Formel

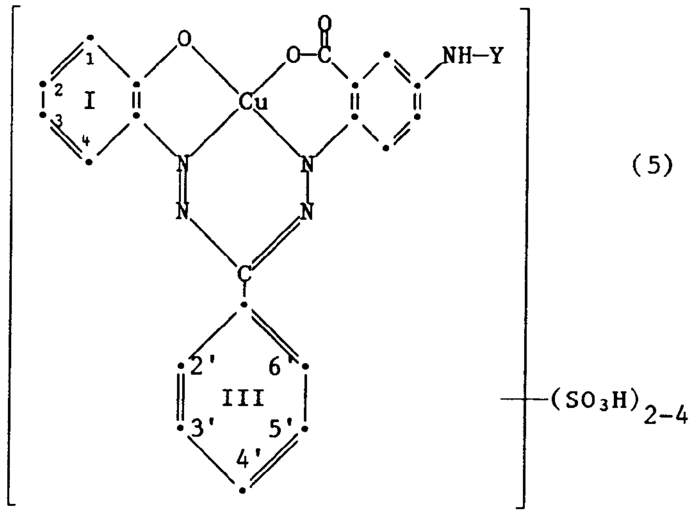

(5)

in Betracht, worin die 2, 3 oder 4 Sulfosäuregruppen in den Benzringen I und III wie folgt gebunden sind: 1,3,3'-Trisulfo; 1,2'-Disulfo; 1,3-Disulfo; 3,2'-Disulfo; 1,3,2',4'-Tetrasulfo; 1,3,4'-Trisulfo; 1,2',4'-Trisulfo; 3,2',4'-Trisulfo; 1,3'-Disulfo; oder 1,3,2'-Trisulfo.

Ganz besonders bevorzugt ist der Reaktivfarbstoff der Formel

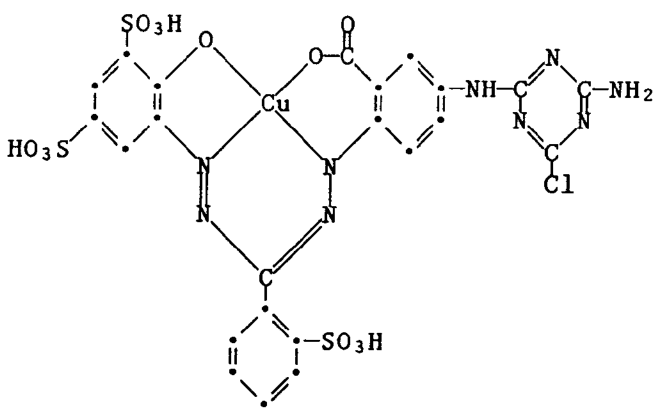

(6).

Ebenfalls ganz besonders bevorzugt ist der Reaktivfarbstoff der Formel

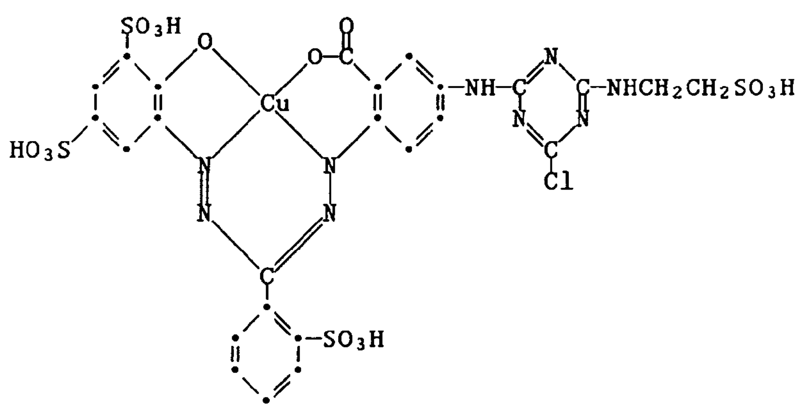

(7).

Der in den Farbstoffen der Formel (1) enthaltene Rest der Formel

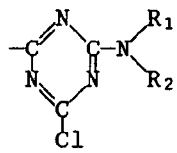

(2)

ist eine reaktive Gruppierung, worin das Cl-Atom eine faserreaktive Abgangsgruppe darstellt. Ferner weist der Rest der Formel (3) einen Reaktivrest auf, und zwar die Gruppe $-SO_2-X$; dieser Reaktivrest enthält eine Abgangsgruppe, z.B. wenn X β-Chloräthyl ist, oder kann nach Art von faserreaktiven Gruppen wirksam werden, z.B. wenn X Vinyl ist (Grundlegendes über Reaktivfarbstoffe siehe Venkataraman, K.: The Chemistry of Synthetic Dyes. New York: Academic Press 1972; Vol VI, Reactive Dyes).

Das Verfahren zur Herstellung der Reaktivfarbstoffe der Formel (1) ist dadurch gekennzeichnet, dass man eine Verbindung der Formel

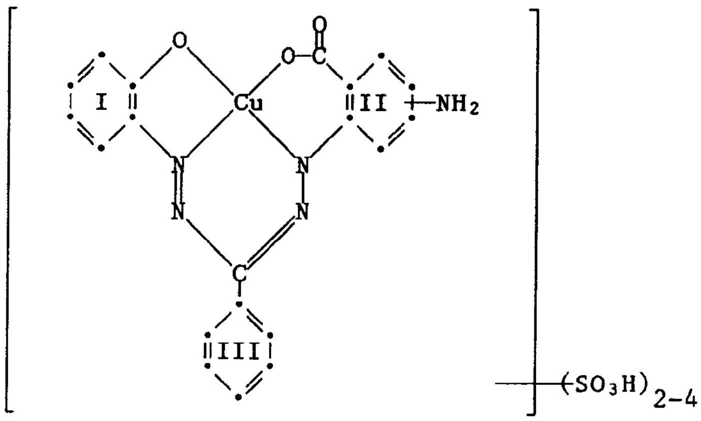

(8)

mit 2,4,6-Trichlor-s-triazin kondensiert und das erhaltene primäre Kondensationsprodukt mit einem Amin der Formel

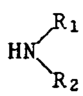

(9)

worin $R_1$ und $R_2$ die angegebenen Bedeutungen haben, kondensiert, oder mit einem 2-Amino-4,6-dichlor-s-triazin kondensiert; oder mit einem dem Rest der Formel (3) entsprechenden Acylhalogenid kondensiert, und gegebenenfalls eine weitere Umwandlungsreaktion anschliesst.

Bevorzugte Ausführungsformen des erfindungsgerässen Verfahrens sind dadurch gekennzeichnet, dass man

(a) ein Amin der Formel (9) oder ein 2-Amino-4,6-dichlor-s-triazin verwendet,

(b) ein Acylhalogenid der Formel

$$Hal-CO-A-SO_2-CH_2CH_2Cl \qquad (10)$$

verwendet, worin Hal Halogen und A n-Propylen, Phenylen oder Endomethylencyclohexylen ist,

(c) eine Verbindung der Formel (8) verwendet, worin die Benzolreste I, II und III keine weiteren Substituenten enthalten.

Eine besonders bevorzugte Ausführungsform des erfindungsgemässen Verfahrens ist dadurch gekennzeichnet, dass man eine Verbindung der Formel

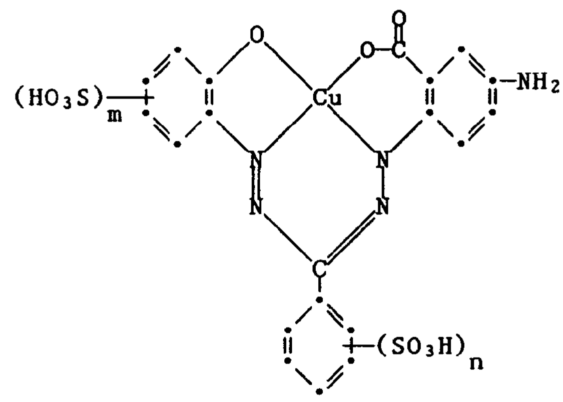

(11)

worin m die Zahl 1 oder 2 und n die Zahl 0, 1 oder 2 ist und m+n = 2, 3 oder 4 ist, verwendet.

Ganz besonders bevorzugte Ausführungsformen des erfindungsgemässen Verfahrens sind dadurch gekennzeichnet, dass man eine Verbindung der Formel (11) mit 2,4,6-Trichlor-s-triazin kondensiert und das erhaltene primäre Kondensationsprodukt mit einem Amin der Formel (9) kondensiert oder mit einem 2-Amino-4,6-dichlor-s-triazin kondensiert.

Die wichtigen Verbindungen der Formeln (6) und (7) werden erhalten, indem man eine Verbindung der Formel

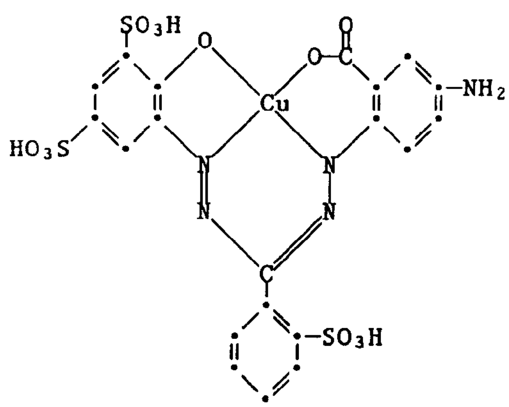

(12)

mit 2,4,6-Trichlor-s-triazin kondensiert und das erhaltene primäre Kondensationsprodukt mit Ammoniak oder β-Sulfoäthylamin kondensiert, oder mit 2-Amino-4,6-dichlor-s-triazin oder 2-(β-Sulfoäthylamino)-4,6-dichlor-s-triazin kondensiert.

Verbindungen der Formel (8) sind z.B. die Kupferkomplexe von
N-(4-Amino-2-carboxyphenyl)-N'-(2'-hydroxy-3',5'-disulfophenyl)-ms-(2"-sulfophenyl)-formazan,
N-(4-Amino-2-carboxyphenyl)-N'-(2'-hydroxy-3',5'-disulfophenyl)-ms-(4"-amino-2"-sulfophenyl)-formazan,
N-(2-Hydroxy-5-sulfophenyl)-N'-(2'-carboxy-4'-aminophenyl)-ms-(2"-sulfophenyl)-formazan,
N-(2-Hydroxy-5-sulfophenyl)-N'-(2'-carboxy-4'-aminophenyl)-ms-(2"-chlor-5"-sulfophenyl)-formazan,
N-(2-Carboxy-4-aminophenyl)-N'-(2'-hydroxy-4'-sulfonaphth-1'-yl)-ms-(2"-sulfophenyl)-formazan,
N-(4-Amino-2-carboxyphenyl)-N'-(2'-hydroxy-3',5'-disulfophenyl)-ms-(3"-sulfophenyl)-formazan,
N-(4-Amino-2-carboxyphenyl)-N'-(2'-hydroxy-3'-sulfophenyl)-ms-(2"-sulfophenyl)-formazan,
N-(4-Amino-2-carboxyphenyl)-N'-(2'-hydroxy-3',5'-disulfophenyl)-ms-(phenyl)-formazan,
N-(4-Amino-2-carboxyphenyl)-N'-(2'-hydroxy-5'-sulfophenyl)-ms-(2"-sulfophenyl)-formazan,
N-(4-Amino-2-carboxyphenyl)-N'-(2'-hydroxy-3',5'-disulfophenyl)-ms-(2",4"-disulfophenyl)-formazan,
N-(4-Amino-2-carboxyphenyl)-N'-(2'-hydroxy-3',5'-disulfophenyl)-ms-(4"-sulfophenyl)-formazan,
N-(4-Amino-2-carboxyphenyl)-N'-(2'-hydroxy-3'-sulfophenyl)-ms-(2",4"-di-sulfophenyl)-formazan,
N-(4-Amino-2-carboxyphenyl)-N'-(2'-hydroxy-5'-sulfophenyl)-ms-(2",4"-di-sulfophenyl)-formazan,
N-(4-Amino-2-carboxyphenyl)-N'-(2'-hydroxy-3'-sulfophenyl)-ms-(3'-sulfophenyl)-formazan.

Als Beispiele für Amine der Formel (9) seien die folgenden genannt: Ammoniak, Methoxyäthylamin, Aethoxyäthylamin, Methoxypropylamin, Chloräthylamin, Hydroxyäthylamin, Dihydroxyäthylamin, Aminomethansulfonsäure, Hydroxypropylamin, Glycin, Aminoäthansulfonsäure, N-Methylaminoäthansulfonsäure, N-Aethylaminoäthansulfonsäure, β-Sulfatoäthylamin, γ-N,N-Di-methylpropylamin, N-Methyl-N-β-hydroxyäthylamin, Hydroxyäthylsulfonyläthoxyäthylamin.

Bei der Herstellung derartiger Triazinfarbstoffe können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus. Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Acylhalogenide, welche der Rest der Formel (3) entsprechen, sind bekannt. Als Beispiele seien genannt:
4-(β-Chloräthylsulfonyl)-butyrylchlorid,
3-(β-Chloräthylsulfonyl)-benzoesäurechlorid,
4-(β-Chloräthylsulfonyl)-benzoesäurechlorid,
4-(β-Chloräthylsulfonyl)-2,5-endomethylen-cyclohexancarbonsäurechlorid.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin X ein Rest $HO-CH_2CH_2-$ ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin X die Gruppe $H_2C=CH-$ ist, und lagert an das Zwischenprodukt Thioschwefelsäure an, wobei ein Rest $HO_3SS-CH_2CH_2-$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für X in eine Verbindung der Formel (1) oder ein Zwischenprodukt anstelle eines Halogenatoms oder der Sulfatogruppe, beispielsweise einer Thiosulfato-oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Chloräthylsulfonyl- oder Sulfatoäthylsulfonylreste enthalten, mit säureabspaltenden Mitteln, wie Natriumhydroxid, behandeln, wobei die Chloräthylsulfonyl- oder Sulfatoäthylsulfonylreste in Vinylsulfonylreste übergehen.

Die Kondensation des 2,4,6-Trichlor-s-triazins mit einer Verbindung der Formel (8) erfolgt vorzugsweise in wässriger Lösung oder Suspension, bei niedrigen Temperaturen, vorzugsweise zwischen 0° und 5°C und bei schwach saurem, neutralem bis schwach alkalischer pH-Wert. Vorteilhaft wird der bei der Kondensation freiwerdende Chlorwasserstoff laufend durch Zugabe wässriger Alkalihydroxide, -carbonate oder -bicarbonate neutralisiert. Für die weitere Umsetzung der so erhaltenen Chlortriazinfarbstoffe bzw. für die Umsetzung des 2,4,6-Trichlor-s-triazins mit den Aminen der Formel (9) setzt man die freien Amine oder deren Salze, bevorzugt in Form des Hydrochlorids, ein. Die Ursetzung wird bei Temperaturen etwa zwischen 0 und 40°, bevorzugt zwischen 5 und 25°C, unter Zusatz säurebindender Mittel, bevorzugt Natriumcarbonat oder eines Ueberschusses des Amins, in einem pH-Bereich von 2 bis 10 bevorzugt 5 bis 8, durchgeführt.

Die Kondensation eines Acylhalogenids mit einer Verbindung der Formel (8) erfolgt ebenfalls vorzugsweise in wässriger Lösung oder Suspension, bei Raumtemperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat oder von Natriumtripolyphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Gegenstand der Erfindung sind ferner lagerstabile, konzentrierte flüssige Farbstoffpräparationen der Reaktivfarbstoffe der Formel (1) sowie ihre Verwendung zur Herstellung von Klotzflotten, Färbebädern und vor allem Druckpasten, die zum Färben und Bedrucken von Fasermaterialien, insbesondere cellulosehaltigen Fasermaterialien verwendet werden.

Flüssige Farbstoffpräparationen haben Vorteile gegenüber der Pulverform, z.B. keine Staubentwicklung

beim Ansetzen von Druckpasten sowie von Klotz- und Färbeflotten, keine Benetzungsprobleme durch Klumpenbildung , keine fleckigen Färbungen durch ungelöste Farbstoffpartikel. Solche flüssige Formulierungen sollten hoch konzentriert (mindestens 10 Gew.-% und vorzugsweise mehr als 15 Gew.-% Farbstoffgehalt) und mindestens über mehrere Monate in einem breiten Temperaturbereich (-10 bis +40°C) unverändert haltbar sein.

Als Ausgangslösung bzw. -suspension zur Herstellung der Farbstoffpräparationen kann man die direkt aus der Synthese erhaltene wässrige, gegebenenfalls Lösungsmittel enthaltende Lösung bzw. Suspension oder eine wässrige Anschlämmung der feuchten Press- oder Filterkuchen der Rohfarbstoffe von unterschiedlichem Gehalt an unerwünschten gelösten Stoffen mit niedrigem Molekulargewicht, besonders von bei der Synthese des Farbstoffes anfallenden Nebenprodukten und gelösten anorganischen und organischen Salzen verwenden. In Fällen, in denen das Kondensationsprodukt nicht oder nur äusserst mühsam aussalzbar ist, kann auch direkt die rohe Kondensations- bzw. Neutralisationslösung verwendet werden. Vorteilhaft verwendet man Ausgangslösungen bzw. -suspensionen, die 2 bis 50 % Farbstoff enthalten.

Man kann aber auch von dem trockenen Rohfarbstoffpulver ausgehen, wenn man es zunächst mit Wasser anschlämmt.

Bei den erfindungsgemässen, konzentrierten flüssigen Präparationen handelt es sich in der Regel um echte oder kolloidale Lösungen. Sie sind dünnflüssig (Viskosität von etwa 5 bis 300 cp/20°C) und gut lagerstabil, d.h. sie bleiben mindestens mehrere Monate bei Temperaturen von -20 bis +60°C, insbesondere -10 bis +40°C in gebrauchsfähigem Zustand. Diese Präparationen können bei der Herstellung von Klotzflotten, Färbebädern und Druckpasten sowohl mit Wasser als auch mit organischen Lösungmsitteln und/oder Verdickungsmittel versetzt werden, ohne dass der Farbstoff ausfällt oder dass es zu anderen Inhomogenitäten kommt. Mit den genannten Klotzflotten, Färbebädern und Druckpasten kann man z.B. Textilmaterialien aus natürlichen oder synthetischen, insbesondere cellulose-haltigen Fasermaterialien in bekannter Weise färben oder bedrucken.

Besonders geeignet sind die erfindungsgemässen stabilen konzentrierten flüssigen Farbstoffpräparationen zur Herstellung von Druckpasten für das Bedrucken von Cellulose-Fasermaterialien.

Ein Verfahren zur Herstellung einer erfindungsgemässen flüssigen Präparation ist in den Ausführungsbeispielen beschrieben.

Die Reaktivfarbstoffe der Formel (1) sind neu. Sie zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen, dass sie gut in der Cellulosefaser diffundieren, und dass sich die nichtfixierten Anteile leicht entfernen lassen.

Die Reaktivfarbstoffe der Formel (1) eignen sich zum Färben und Bedrucken der verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich vor aller zum Druck, insbesondere auf Baumwolle, ebenso aber auch zur Bedrucken von stickstoffhaltigen Fasern, z.B. von Wolle, Seide oder Wolle enthaltenden Mischgeweben.

Es empfiehlt sich, die Färbungen und Drucke einer gründlichen Spülen mit kaltem und heisser Wasser, gegebenenfalls unter Zusatz eines dispergierend wirkenden und die Diffusion der nichtfixierten Anteile fördernden Mittels zu unterwerfen.

Bei dem Anwendung in der Praxis werden die erfindungsgemässen Farbstoffe vorteilhaft als flüssige Färbe- oder Druckpräparate eingesetzt.

Die in den nachfolgenden Beispielen als Ausgangsprodukt verwendete Formazanverbindung hat die Formel

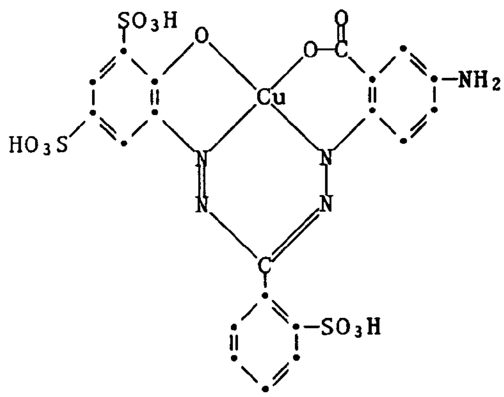

(100).

Beispiel 1: Zu einer neutralen Lösung von 33.8 Gew.-Teilen des Formazans der Formel (100) in 400 Vol.-Teilen Wasser werden bei 0-5°C 10.0 Gew.-Teile Cyanurchlorid gegeben. Während der Kondensation lässt man den pH zunächst auf 4.0 fallen und hält ihn dort durch Zugabe von 21 Vol.-Teilen 2n Natronlauge. Danach werden 16 Vol.-Teile Ammoniak à 30 % zugegeben. Bei dem sich zunächst einstellenden pH von 10.5 wird nun bei 40°C bis zur vollständigen Umsetzung kondensiert, dabei fällt der pH auf 9.0. Durch Zugabe von 6 Vol.-Teilen 10n HCl wird der pH auf 7.5 gestellt; danach wird mit Kochsalz der Farbstoff der Formel:

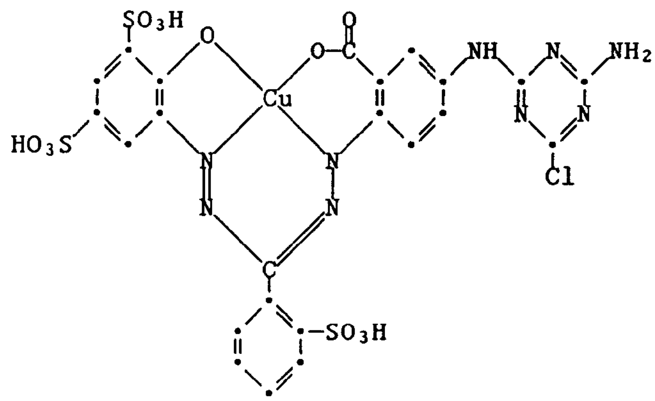

(101)

gefällt. Mit dem so erhaltenen dunkelblauen Farbstoffpulver lässt sich Baumwolle in neutralblauen Tönen färben oder bedrucken.

Weitere Farbstoffe werden erhalten, wenn anstelle von Ammoniak äquivalente Mengen der unten aufgeführten Amine verwendet werden.

| Beispiel | Amine |
|---|---|
| 2 | Aethanolamin |
| 3 | Diäthanolamin |
| 4 | N-Methyl-taurin |
| 5 | N-Aethyl-taurin |
| 6 | 2-Amino-äthyl-sulfat |
| 7 | Glycin |
| 8 | 3-Amino-propanol |
| 9 | 2-Methoxy-äthylamin |
| 10 | 2-Methylamino-äthanol |
| 11 | 2-(2-Amino-äthoxy)-2'-hydroxy-diäthylsulfon |
| 12 | Aminomethansulfosäure |

Herstellung eines konzentrierten flüssigen Farbstoffpräparates

9 kg Presskuchen des Rohfarbstoffes der Formel von Beispiel 1 werden mit 35 kg Wasser angeschlämmt. Die erhaltene Suspension mit einem Trockengehalt von 7,9 % (ca. 5,9 % Farbstoff und 2,07 % NaCl) wird auf einer Anlage für Umkehr-Osmose (0,84 $m^2$ Membranfläche), die wie in der EP-A-59782 beschrieben hergestellt wurde und die einen "Cut-off-level" von 500 besitzt, entsalzt und aufkonzentriert. Die Umkehr-Osmose wird bei pH 6,5-7,5, 20°C und einem Druck von 25 bar in zwei Stufen durchgeführt:

a) Entsalzung:

Nach der Zugabe von 40 l Wasser und anschliessender Entfernung von 40 l Permeat (mittlere Durchflussmenge ca. 20 l/Std.), erhält man eine Farbstofflösung mit einem Salzgehalt von 0,43 %.

b) Aufkonzentrierung:

Nach der Entsalzung werden 33,1 l Permeat (mittlere Durchflussmenge ca. 12 l/Std.) entfernt. Man erhält 10,9 kg einer konzentrierten Farbstofflösung mit 23,6 % Trockengehalt, deren Natriumchloridgehalt geringer als 0,01 % ist.

94,4 Teile der so erhaltenen Farbstofflösung werden unter Rühren bei 40°C innerhalb von 10 Minuten mit 1,5 Teilen Natriumtripolyphosphat versetzt und mit 4,2 Teilen Wasser verdünnt. Man erhält eine Flüssigformulierung mit einem pH-Wert von 7,0 folgender Zusammensetzung:

22,3 Gew.-% Farbstoff
1,5 Gew.-% Natriumtripolyphosphat
ca. 76,3 Gew.-% Wasser
<0,1 Gew.-% Natriumchlorid

Die entstandene echte Lösung ist dünnflüssig (ca. 6 cP bei 20°C Brookfield, Spindel No. 2) und ist während mehrerer Monate bei -10°C bis +40°C unverändert haltbar. (Chemische und physikalische Lagerstabilität)

Statt des im obigen Beispiel verwendeten Presskuchens kann auch eine äquivalente Menge der neutralisierten Syntheselösung (ev. nach entsprechender Einstellung der Konzentration) verwendet werden.

Die so hergestellte flüssige Handelsform kann anstelle des pulverförmigen Farbstoffs in allen Färbe- und Druck-Rezepten verwendet werden, man erhält die gleichen Ergebnisse.

Beispiel 13: In 500 ml Wasser werden 33,8 Gew.-Teile des Formazan-Chromophors der Formel (100) angeschlämmt und durch Zugabe von Natronlauge bei pH 7 gelöst. Nun wird eine Lösung von 14,5 Gew.-Teilen β-Chlorethyl-4-benzoylchlorid-sulfon in 50 Vol.-Teilen Aceton zugetropft. Durch weitere Zugabe von 2n Natronlauge wird der pH zwischen 5 und 6 gehalten. Nach etwa 4-stündigem Nachrühren bei dem gleichen pH und bei Raumtemperatur ist keine freie Amino-Gruppe mehr nachzuweisen. Der so hergestellte Farbstoff der For-

mel

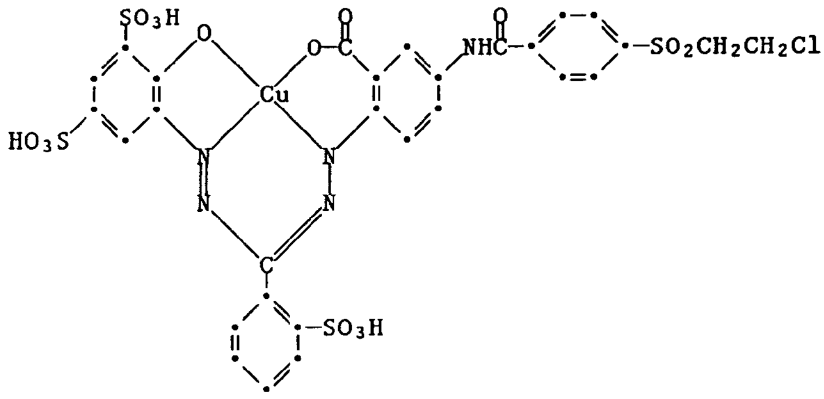

(102)

wird durch Aussalzen isoliert. Er färbt Baumwolle in neutralblauer, sehr echtem Farbton.

Farbstoffe von ähnlich guten Eigenschaften und der gleichen Nuance lassen sich herstellen, indem man zur Acylierung äquivalente Mengen der folgenden Säurechloride verwendet:

14 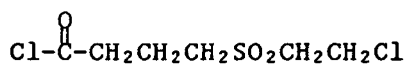

15 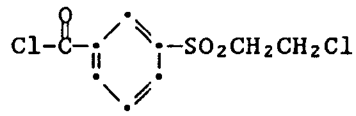

16 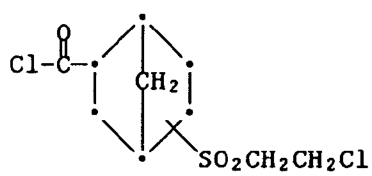

Beispiel 17: Zu einer fein gemahlenen Suspension von 9,4 Gew.-Teilen Cyanurchlorid in 25 Vol.-Teilen Wasser wird eine neutrale Lösung von 33,8 Gew.-Teilen des Formazan-Chromophors der Formel (100) in 400 Vol.- Teilen Wasser so zulaufen gelassen, dass der pH durch gleichzeitiges Zudosieren von 1n Natronlauge auf 4,5 gehalten werden kann. Die Temperatur wird durch Kühlung auf 0-5 °C gehalten. Wenn das Ende der ersten Kondensation chromatographisch festgestellt worden ist, wird eine Lösung von 6,25 Gew.-Teilen Taurin in 65 Vol.-Teilen Wasser zugestürzt. Durch Zugabe von Natronlauge wird der pH auf 8,5 gestellt und nach Aufheizen auf 40°C bei 8,5 gehalten. (Verbrauch ca. 165 Vol.-Teile 1n-Natronlauge). Nach dem Ende der 2. Kondensation wird mit wenig konzentrierter Salzsäure der pH auf 7,0 gestellt. Nach Entsalzen und Eindampfen erhält man ein schwarz-blaues Farbstoffpulver der Formel:

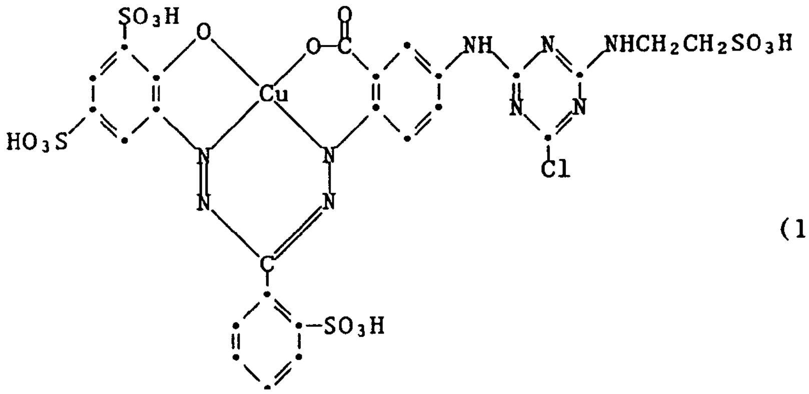

(103)

mit dem Baumwolle in klaren neutralblauen Tönen sehr echt bedruckt und gefärbt werden kann.

Wenn man wie in den Beispielen 1 bis 17 angegeben verfährt und anstelle des Formazans der Formel (100) eine Verbindung der folgenden Formeln (104) bis (112) verwendet,

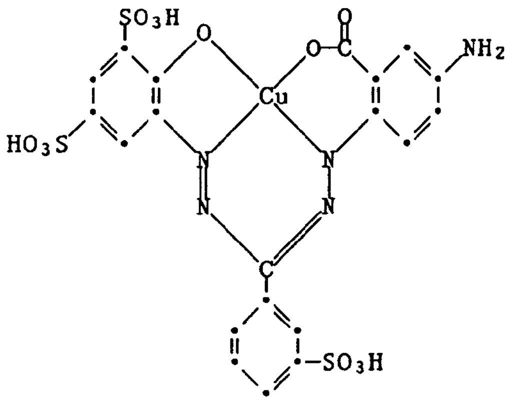

(104)

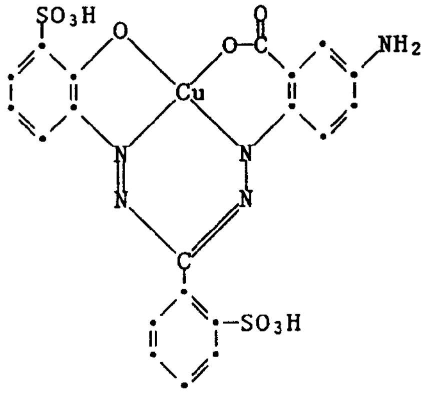

(105)

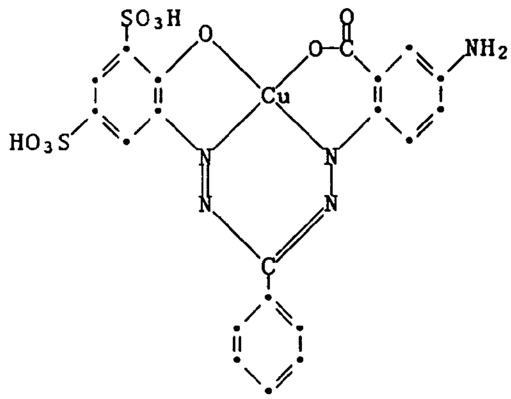

(106)

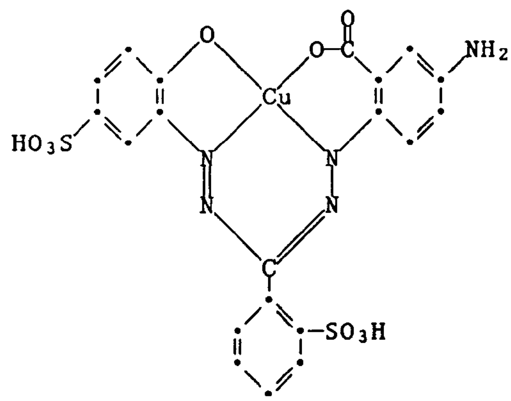

(107)

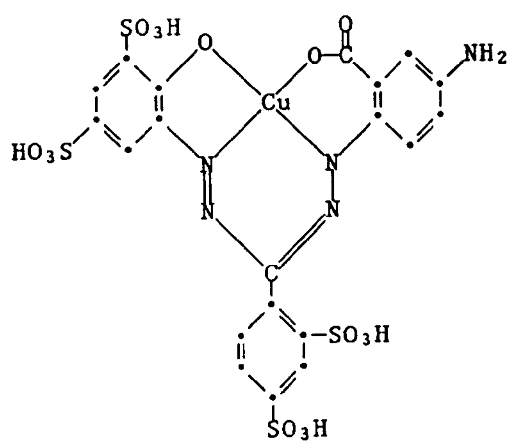

(108)

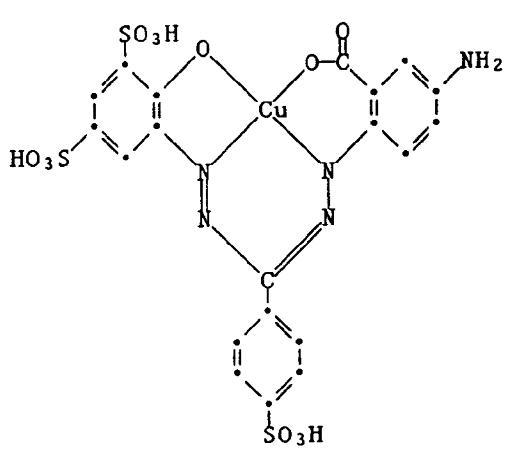

(109)

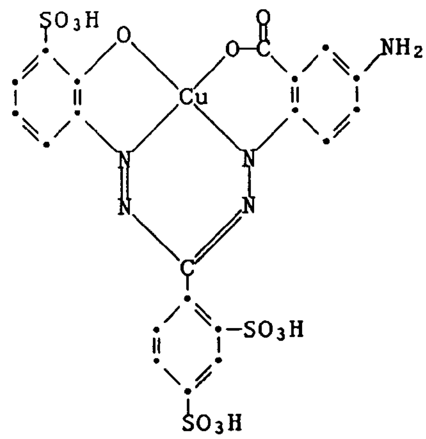

(110)

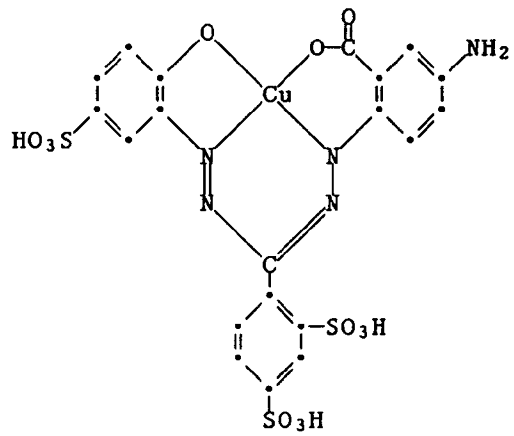

(111)

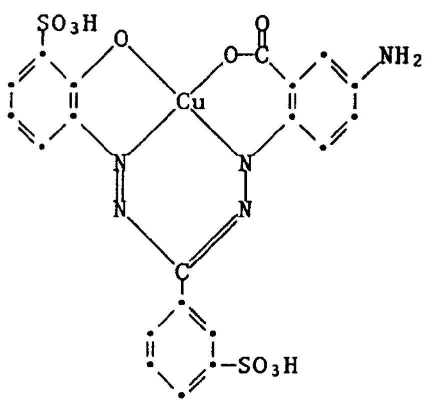

(112),

so erhält man Farbstoffe mit ähnlich guten Eigenschaften und ähnlicher Nuance.

Färbevorschrift 1

2 Teile des gemäss Beispiel 1 erhaltenen Farbstoffes werden unter Zusatz von 5 bis 20 Teilen Harnstoff und 2 Teilen kalzinierter Soda in 100 Teilen Wasser bei 20 bis 50°C gelöst. Mit der erhaltenen Lösung wird ein Baumwollgewebe imprägniert, so dass es um 50 bis 80 % seines Gewichtes zunimmt, und dann getrocknet. Danach wird während 1 1/2 bis 5 Minuten bei 140 bis 210°C thermofixiert, dann während einer Viertelstunde in einer 0,1%igen kochenden Lösung eines ionenfreien Waschmittels geseift, gespült und getrocknet.

Färbevorschrift 2

2 Teile des gemäss Beispiel 1 erhaltenen Farbstoffes werden in 2000 Teilen Wasser unter Zusatz von 120 Teilen Kochsalz oder kalziniertem Glaubersalz bei 75°C gelöst. Man geht mit 100 Teilen eines Baumwollgewebes in dieses Färbebad ein und hält die Temperatur während 30 bis 60 Minuten konstant. Danach werden 10 Teile kalzinierter Soda und 4 ml Natronlauge (36°Bé) zugegeben. Die Temperatur wird weitere 45 bis 60 Minuten bei 75 bis 80°C gehalten, dann wird während 15 Minuten in einer 0,1%igen kochenden Lösung eines ionenfreien Waschmittels geseift, gespült und getrocknet.

Färbevorschrift 3

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Danach imprägniert man das Gewebe mit einer 20°C warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101°C, spült, seift während einer Viertelstunde in einer 0,3%igen kochenden Lösung eines ionenfreien Waschmittels, spült und trocknet.

Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°C, wobei nach 30 Minuten 40 Teile kalzinierte Soda und nochmals 60 Teile Natriumchlorid zugegeben werden. Man hält die Temperatur 30 Minuten auf 60°C, spült und seift dann die Färbung während 15 Minuten in einer 0,3%igen kochenden Lösung eines ionenfreien Waschmittels, spült und trocknet.

Druckvorschrift 1

2 Teile des gemäss Beispiel 1 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100°C in gesättigtem Dampf. Das bedruckte Gewebe wird dann in kaltem und heisser Wasser gründlich gespült, wobei sich die nicht chemisch fixierten Anteile sehr leicht von der Faser entfernen lassen, und anschliessend getrocknet.

Druckvorschrift 2

a) Eine Stammverdickung wird wie folgt zubereitet:
500 kg einer 5 %-igen Na-Alginatlösung von hoher Viskosität werden mit
125 kg Harnstoff
12,5 kg Na-Salz der Nitrobenzolsulfonsäure
75 kg einer 25 %-igen Sodalösung und
287,5 kg Wasser
in einem Behälter mittels eines Rührwerkes gut durchmischt.
b) In 800 g dieser Stammverdickung werden nun manuell 200 g der flüssigen Formulierung des im Beispiel 1 angegebenen Reaktivfarbstoffes eingerührt. Man erhält eine gebrauchsfähige homogene Druckfarbe.
Mit einem Teil dieser Druckfarbe wird ein Gewebe aus mercerisierter, gebleichter Baumwolle bedruckt.

Vom Rest der Druckfarbe werden 20 g abgewogen und wiederum manuell mit 980 g der obigen Stammverdickung vermischt und damit ebenfalls ein Gewebe aus mercerisierter, gebleichter Baumwolle bedruckt.

Nach dem Trocknen werden die beiden Drucke in gesättigtem Wasserdampf fixiert und anschliessend in kaltem und heissem Wasser gespült.

Es resultieren vom ersten Druck ein farbstarkes, brillantes und egales Farbmotiv, vom zweiten Druck ein pastellfarbenes, absolut sprickelfreies und egales Motiv.

**Patentansprüche**

**Patentansprüche für folgende Vertragsstaaten : BE, CH, DE, FR, GB, IT, LI**

1. Reaktivfarbstoffe der Formel

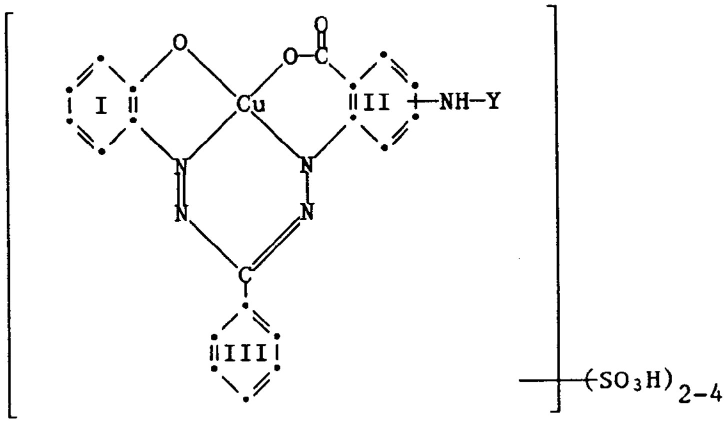

(1),

worin Y ein Rest der Formel

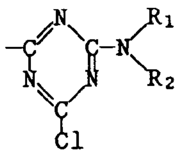

(2)

oder

-CO-A-$SO_2$-X (3),

$R_1$ und $R_2$ unabhängig voneinander Wasserstoff oder $C_{1-4}$-Alkyl sind, substituiert durch Halogen, Cyan, $C_{1-4}$-Alkoxy, N,N-Di-$C_{1-4}$-alkylamino, Hydroxy, Carboxy, Sulfo oder Sulfato;
A ein gegebenenfalls substituiertes aliphatisches oder aromatisches Brückenglied und X β-Sulfatoäthyl, β-Thiosulfatoäthyl, β-Phosphatoäthyl, β-Acyloxyäthyl, β-Halogenäthyl oder Vinyl ist, die Benzolreste I, II und III ausser 2 bis 4 Sulfogruppen bzw. dem Rest -NH-Y im Benzolrest II weitere Substituenten enthalten können; und die Reaktivfarbstoffe der Formel (1) nur einen einzigen faserreaktiven Rest enthalten.

2. Reaktivfarbstoffe nach Anspruch 1, dadurch gekennzeichnet, dass Y ein Rest der Formel
-CO-A-$SO_2$-$CH_2CH_2$-Cl (3a)
ist, worin A n-Propylen, Phenylen oder Endomethylencyclohexan-diyl ist.

3. Reaktivfarbstoffe nach Anspruch 1, worin die Benzolreste I, II und III keine weiteren Substituenten enthalten.

4. Reaktivfarbstoff nach einem der Ansprüche 1 bis 3, der Formel

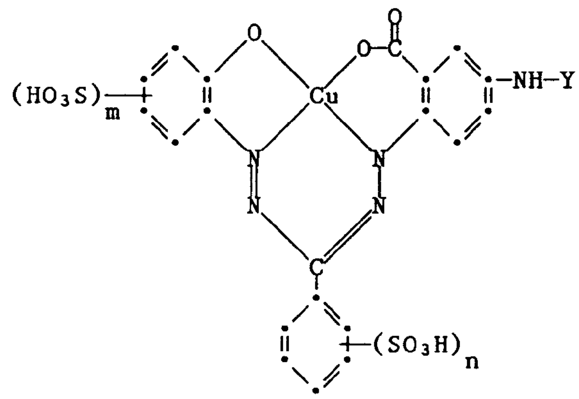

(4),

worin Y die in Anspruch 1 angegebene Bedeutung hat, m die Zahl 1 oder 2 und n die Zahl 0, 1 oder 2 ist und m+n = 2, 3 oder 4 ist.

5. Reaktivfarbstoff nach Anspruch 1, der Formel

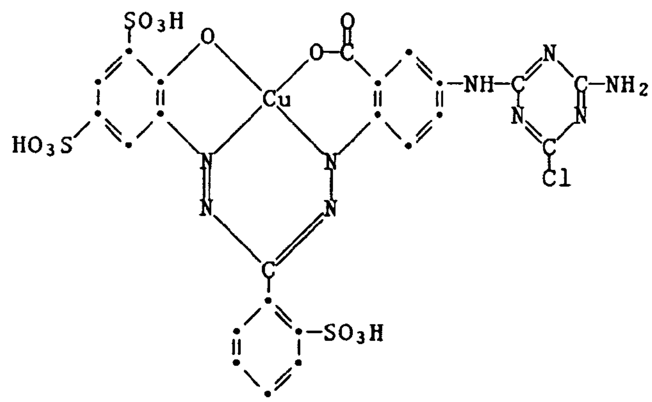

(6).

6. Reaktivfarbstoff nach Anspruch 1, der Formel

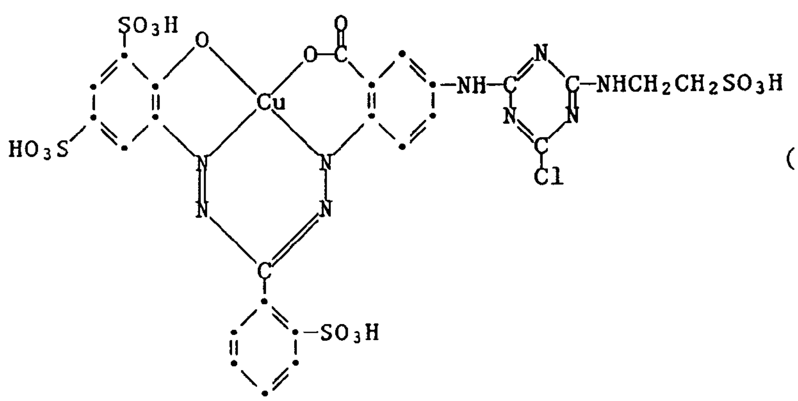

(7).

7. Verfahren zur Herstellung von Reaktivfarbstoffen gemäss Anspruch 1, dadurch gekennzeichnet, dass man eine Verbindung der Formel

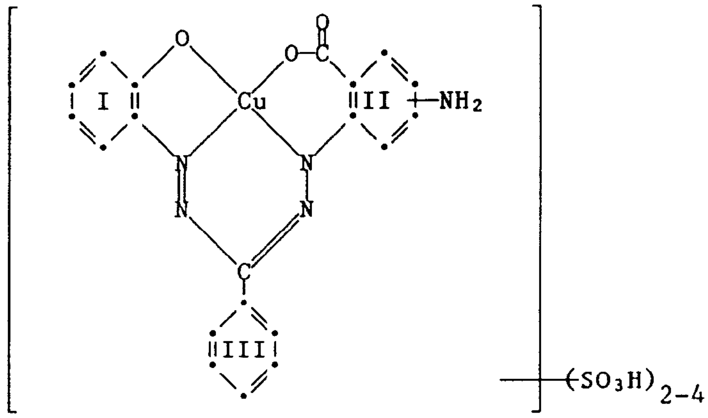

(8)

mit 2,4,6-Trichlor-s-triazin kondensiert und das erhaltene primäre Kondensationsprodukt mit einem Amin der Formel

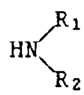

(9)

kondensiert, oder mit einem 2-Amino-4,6-dichlor-s-triazin kondensiert; oder mit einem dem Rest der Formel (3) entsprechenden Acylhalogenid kondensiert, und gegebenenfalls weitere Umwandlungsreaktionen anschliesst.

8. Verwendung der Reaktivfarbstoffe gemäss Anspruch 1 zum Färben oder Bedrucken von cellulosehaltigen Fasermaterialien.

9. Verwendung der Reaktivfarbstoffe gemäss Anspruch 11 zum Färben oder Bedrucken von Baumwolle.

10. Lagerstabile, konzentrierte flüssige Farbstoffpräparationen von wasserlöslichen Reaktivfarbstoffen gemäss Anspruch 1.

**Patentansprüche für folgenden Vertragsstaat : ES**

1. Verfahren zur Herstellung von Reaktivfarbstoffen der Formel

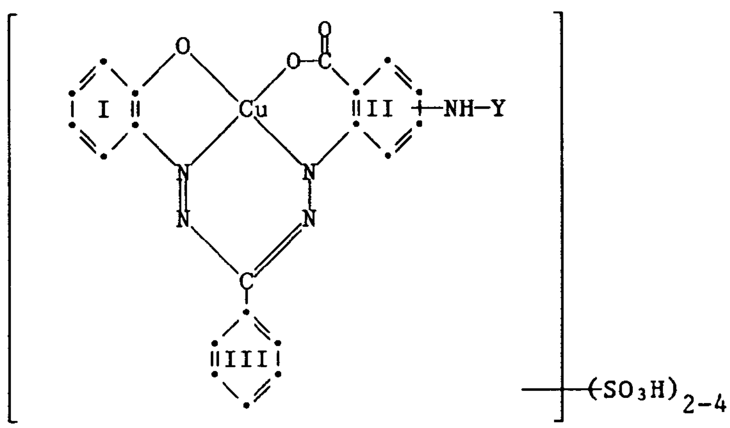

(1),

worin Y ein Rest der Formel

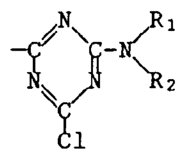

(2)

oder

-CO-A-$SO_2$-X (3),

$R_1$ und $R_2$ unabhängig voneinander Wasserstoff oder $C_{1-4}$-Alkyl sind, substituiert durch Halogen, Cyan, $C_{1-4}$-Alkoxy, N,N-Di-$C_{1-4}$-alkylamino, Hydroxy, Carboxy, Sulfo oder Sulfato; A ein gegebenenfalls substituiertes aliphatisches oder aromatisches Brückenglied, und X β-Sulfatoäthyl, β-Thiosulfatoäthyl, β-Phosphatoäthyl, β-Acyloxyäthyl, β-Halogenäthyl oder Vinyl ist, die Benzolreste I, II und III ausser 2 bis 4 Sulfogruppen bzw. dem Rest -NH-Y im Benzolrest II weitere Substituenten enthalten können; und die Reaktivfarbstoffe der Formel (1) nur einen einzigen faserreaktiven Rest enthalten, dadurch gekennzeichnet, dass man eine Verbindung der Formel

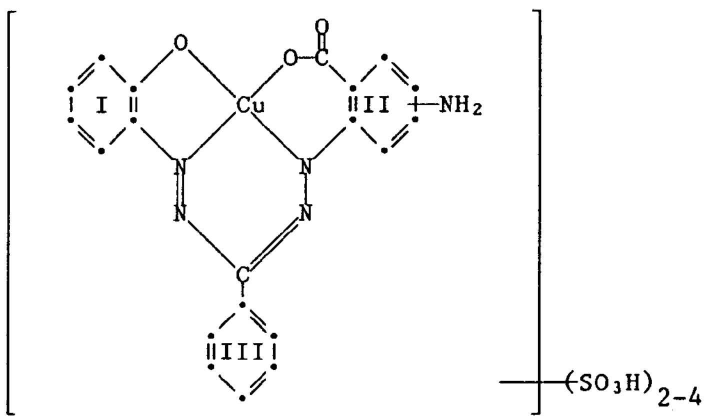

(8)

mit 2,4,6-Trichlor-s-triazin kondensiert und das erhaltene primäre Kondensationsprodukt mit einem Amin der Formel

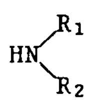

(9),

worin $R_1$ und $R_2$ die angegebenen Bedeutungen haben, kondensiert, oder mit einem 2-Amino-4,6-dichlor-s-triazin kondensiert; oder mit einem dem Rest der Formel (3) entsprechenden Acylhalogenid kondensiert, und gegebenenfalls weitere Umwandlungsreaktionen anschliesst.

2. Verfahren nach Anspruch 1, dadurch gekennzeichnet, dass man ein Acylhalogenid der Formel

Hal-CO-A-$SO_2$-$CH_2CH_2Cl$ (10)

verwendet, worin Hal Halogen und A n-Propylen, Phenylen oder Endomethylencyclohexylen ist.

3. Verfahren nach Anspruch 1, dadurch gekennzeichnet, dass man eine Verbindung der Formel (8) verwendet, worin die Benzolreste I, II und III keine weiteren Substituenten enthalten.

4. Verfahren nach einem der Ansprüche 1 bis 3, dadurch gekennzeichnet, dass man eine Verbindung der Formel

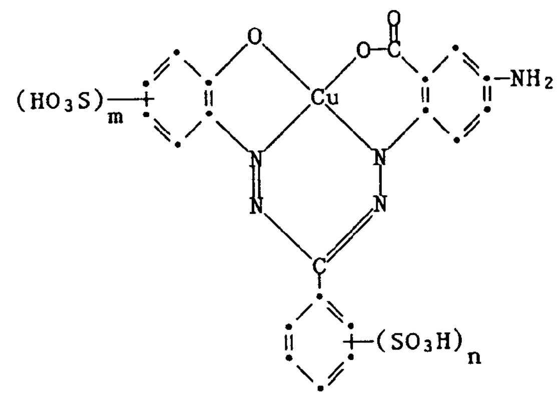

(11)

worin m die Zahl 1 oder 2 und n die Zahl 0, 1 oder 2 ist und m+n = 2, 3 oder 4 ist, verwendet.

5. Verfahren nach Anspruch 4, dadurch gekennzeichnet, dass man eine Verbindung der Formel (11) mit 2,4,6-Trichlor-s-triazin kondensiert und das erhaltene primäre Kondensationsprodukt mit einem Amin der Formel (9) oder mit einem 2-Amino-4,6-dichlor-s-triazin kondensiert, worin der Rest

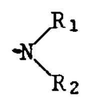

,

$-NH_2$, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, N-Methyl-N-β-sulfoäthylamino, N-Aethyl-N-β-sulfoäthylamino, β-Hydroxyäthylamino, N,N-Di-β-hydroxyäthylamino, β-Sulfatoäthylamino, γ-Hydroxypropylamino, 3-(N,N-Dimethylamino)-propylamino, Carboxymethylamino, oder β-Hydroxyäthylsulfonyläthoxyäthylamino ist.

6. Verfahren gemäss Anspruch 5, dadurch gekennzeichnet, dass man eine Verbindung der Formel

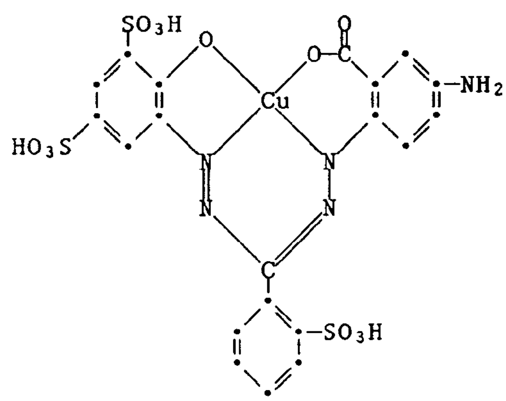

(12)

mit 2,4,6-Trichlor-s-triazin kondensiert und das erhaltene primäre Kondensationsprodukt mit Ammoniak kondensiert, oder mit 2-Amino-4,6-dichlor-s-triazin kondensiert.

7. Verfahren gemäss Anspruch 6, dadurch gekennzeichnet, dass man eine Verbindung der Formel

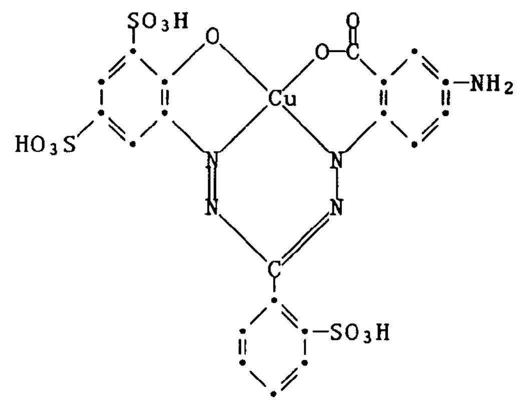

(12)

mit 2,4,6-Trichlor-s-triazin kondensiert und das erhaltene primäre Kondensationsprodukt mit β-Sulfoäthylamin kondensiert, oder mit 2-(β-Sulfoäthylamino)-4,6-dichlor-s-triazin kondensiert.

8. Verwendung der gemäss Anspruch 1 erhaltenen Reaktivfarbstoffe zum Färben oder Bedrucken von cellulosehaltigen Fasermaterialien.

9. Verwendung gemäss Anspruch 8, zum Färben oder Bedrucken von Baumwolle.

10. Lagerstabile, konzentrierte flüssige Farbstoffpräparationen von wasserlöslichen Reaktivfarbstoffen der Formel

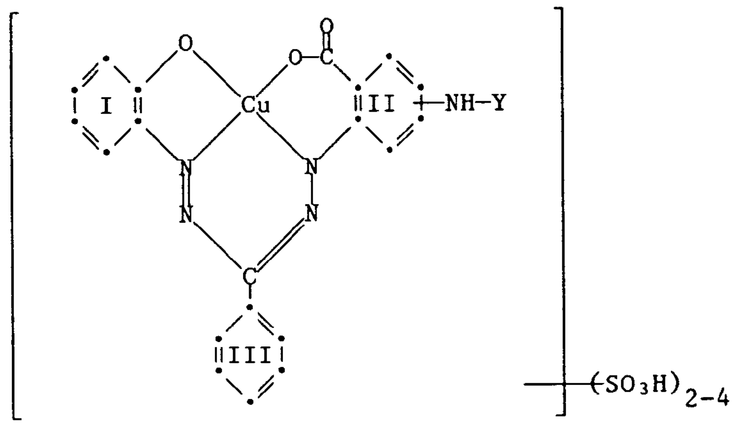

(1),

worin Y ein Rest der Formel

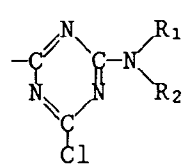

(2)

oder

$-CO-A-SO_2-X$ (3),

$R_1$ und $R_2$ unabhängig voneinander Wasserstoff oder $C_{1-4}$-Alkyl sind, substituiert durch Halogen, Cyan, $C_{1-4}$-Alkoxy, N,N-Di-$C_{1-4}$-alkylamino, Hydroxy, Carboxy, Sulfo oder Sulfato; A ein gegebenenfalls substituiertes aliphatisches oder aromatisches Brückenglied, und X β-Sulfatoäthyl, β-Thiosulfatoäthyl, β-Phosphatoäthyl, β-Acyloxyäthyl, β-Halogenäthyl oder Vinyl ist, die Benzolreste I, II und III ausser 2 bis 4 Sulfogruppen bzw. dem Rest -NH-Y im Benzolrest II weitere Substituenten enthalten können; und die Reaktivfarbstoffe der Formel (1) nur einen einzigen faserreaktiven Rest enthalten.

## Claims

### Claims for the following Contracting States : BE, CH, DE, FR, GB, IT, LI

1. A reactive dye of formula

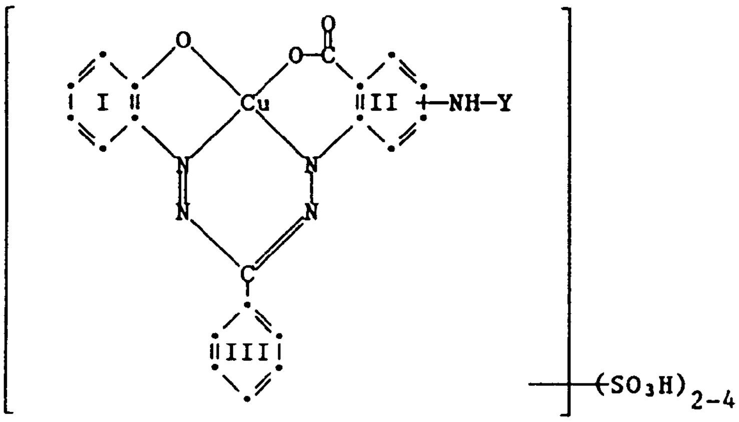

(1)

in which Y is a radical of formula

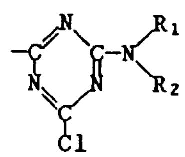

(2)

or

$$-CO-A-SO_2-X \qquad (3)$$

$R_1$ and $R_2$ are each independently of the other hydrogen or $C_{1-4}$alkyl substituted by halogen, cyano, $C_{1-4}$alkoxy, N,N-di-$C_{1-4}$alkylamino, hydroxyl, carboxyl, sulfo or sulfato; A is an unsubstituted or a substituted aliphatic or aromatic bridging group, and X is β-sulfatoethyl, β-thiosulfatoethyl, β-phosphatoethyl, β-acetoxyethyl, β-haloethyl or vinyl; the benzene radicals, I, II and III may contain further substituents in addition to 2 to 4 sulfo groups and, in the benzene radical II, to the radical -NH-Y; and the reactive dye of formula (1) contains only a single fibre-reactive radical.

2. A reactive dye according to claim 1, wherein Y is a radical of formula

$$-CO-A-SO_2-CH_2CH_2-Cl \qquad (3a)$$

in which A is n-propylene, phenylene or endomethylenecyclohexanediyl.

3. A reactive dye according to claim 1, in which the benzene radicals, I, II and III do not contain further substituents.

4. A reactive dye according to any one of claims 1 to 3, of formula

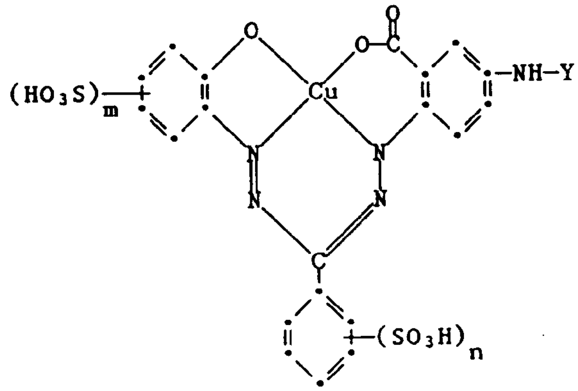

(4)

in which Y is as defined in claim 1, m is the number 1 or 2, and n is the number 0, 1 or 2, and m + n is 2, 3 or 4.

5. A reactive dye according to claim 1, of formula

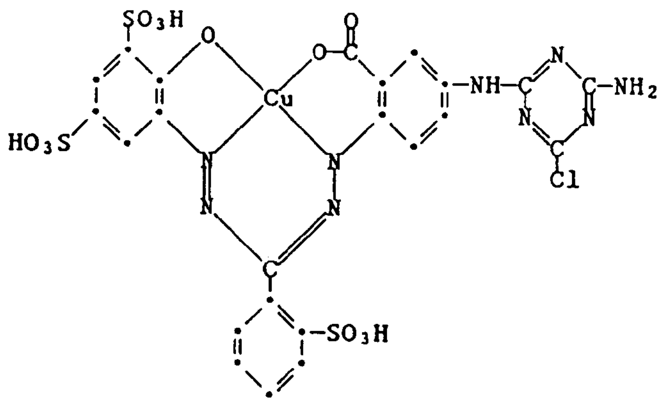

(6)

6. A reactive dye according to claim 1, of formula

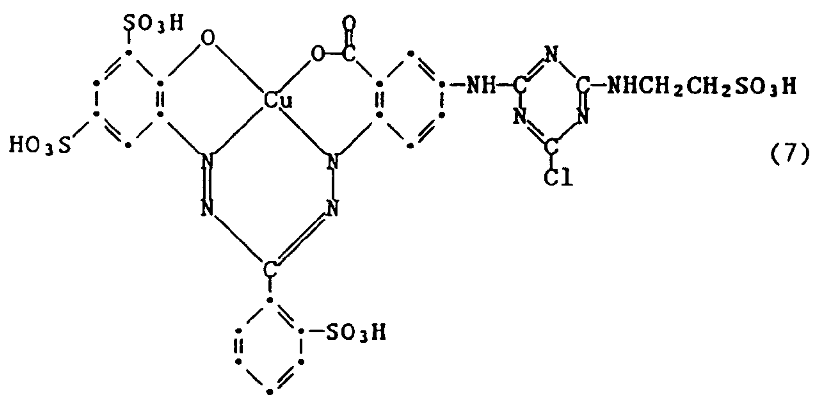

(7)

7. A process for the preparation of a reactive dye according to claim 1, which comprises condensing a compound of formula

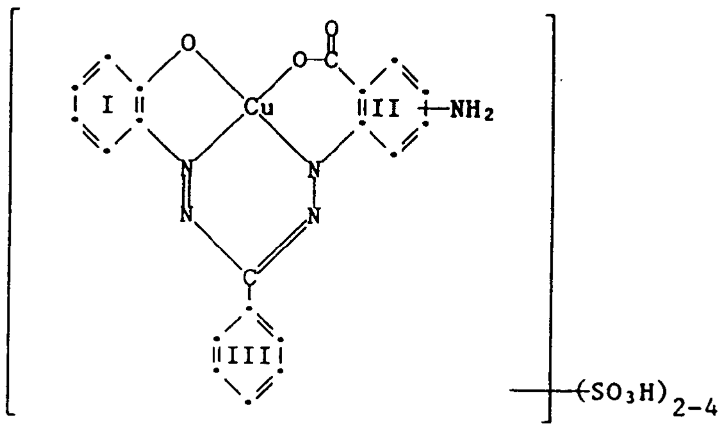

(8)

with 2,4,6-trichloro-s-triazine, and condensing the resultant primary condensate with an amine of formula

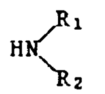

(9),

or with a 2-amino-4,6-dichloro-s-triazine, or with an acyl halide corresponding to the radical of formula (3), and carrying out a further optional conversion.

8. Use of a reactive dye according to claim 1 for dyeing or printing cellulosic fibre materials.

9. Use of a reactive dye according to claim 11 for dyeing or printing cotton.

10. A storage-stable, concentrated, liquid dye formulation of a water-soluble reactive dye according to claim 1.

**Claims for the following Contracting State : ES**

1. A process for the preparation of a reactive dye of formula

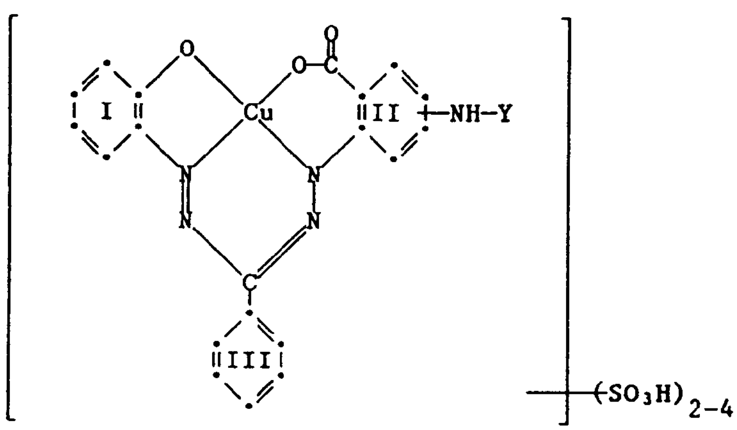

(1)

in which Y is a radical of formula

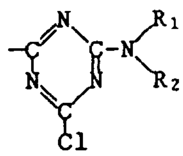

(2)

or

-CO-A-$SO_2$-X (3)

$R_1$ and $R_2$ are each independently of the other hydrogen or $C_{1-4}$alkyl substituted by halogen, cyano, $C_{1-4}$alkoxy, N,N-di-$C_{1-4}$alkylamino, hydroxyl, carboxyl, sulfo or sulfato; A is an unsubstituted or a substituted aliphatic or aromatic bridging group, and X is β-sulfatoethyl, β-thiosulfatoethyl, β-phosphatoethyl, β-acetoxyethyl, β-haloethyl or vinyl; the benzene radicals, I, II and III may contain further substituents in addition to 2 to 4 sulfo groups and, in the benzene radical II, to the radical -NH-Y; and the reactive dye of formula (1) contains only a single fibre-reactive radical which comprises condensing a compound of formula

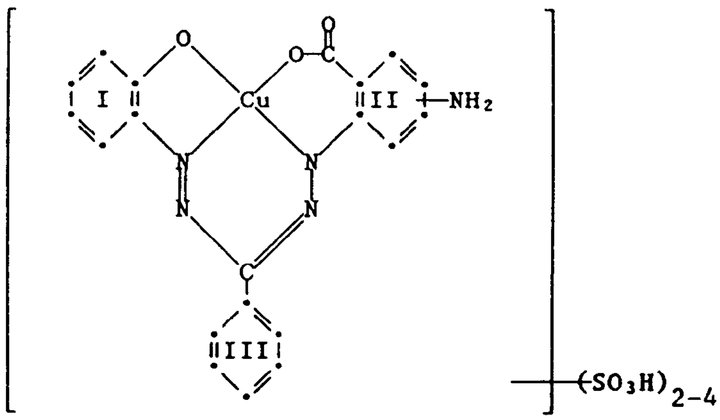

(8)

with 2,4,6-trichloro-s-triazine, and condensing the resultant primary condensate with an amine of formula

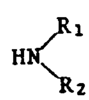

(9),

in which $R_1$ and $R_2$ are as defined above, or with a 2-amino-4,6-dichloro-s-triazine, or with an acyl halide corresponding to the radical of formula (3), and carrying out a further optional conversion.

**2.** A process according to claim 1, which comprises using an acyl halide of formula

Hal-CO-A-$SO_2$-$CH_2CH_2Cl$ (10)

in which Hal is halogen and A is n-propylene, phenylene or endomethylenecyclohexylene.

**3.** A process according to claim 1, which comprises using a compound of formula (8) in which the benzene radicals, I, II and III do not contain further substituents.

**4.** A process according to any one of claims 1 to 3, which comprises using a compound of formula

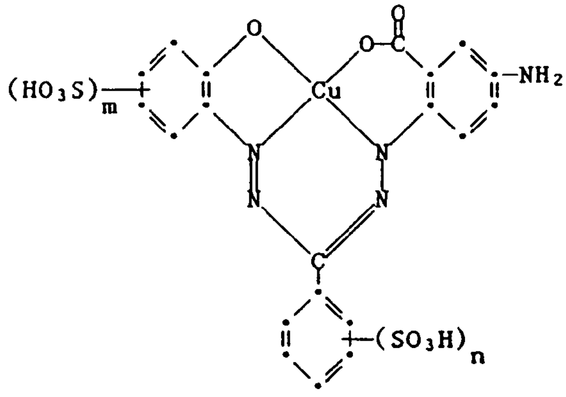

(11)

in which m is the number 1 or 2, and n is the number 0, 1 or 2, and m + n is 2, 3 or 4.

5. A process according to claim 4 which comprises condensing a compound of formula (11) with 2,4,6-trichloro-s-triazine, and condensing the resultant primary condensate with an amine of formula (9), or with a 2-amino-4,6-dichloro-s-triazine in which the radical

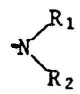

is -$NH_2$, β-methoxyethylamino, γ-methoxypropylamino, β-ethoxyethylamino, N,N-dimethylamino, N,N-diethylamino, β-chloroethylamino, β-cyanoethylamino, γ-cyanopropylamino, β-carboxyethylamino, sulfomethylamino, β-sulfoethylamino, N-methyl-N-β-sulfoethylamino, N-ethyl-N-β-sulfoethylamino, β-hydroxyethylamino, N,N-di-β-hydroxyethylamino, β-sulfatoethylamino, γ-hydroxypropylamino, 3-(N,N-dimethylamino)-propylamino, carboxymethylamino, or β-hydroxyethylsulfonylethoxyethylamino.

6. A process according to claim 5, which comprises condensing a compound of formula

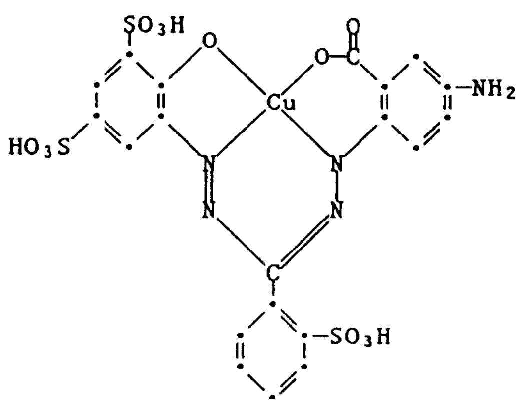

(12)

with 2,4,6-trichloro-s-triazine, and condensing the resultant primary condensate with ammonia, or with 2-amino-4,6-dichloro-s-triazine.

7. A process according to claim 6, which comprises condensing a compound of formula

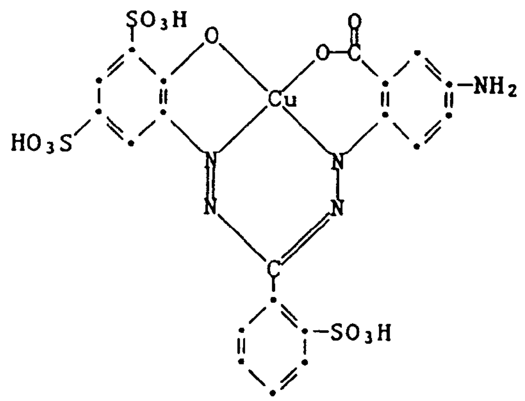

(12)

with 2,4,6-trichloro-s-triazine, and condensing the resultant primary condensate with β-sulfoethylamine, or with 2-(β-sulfoethylamino)-4,6-dichloro-s-triazine.

**8.** Use of a reactive dye obtained according to claim 1 for dyeing or printing cellulosic fibre materials.

**9.** Use according to claim 8 for dyeing or printing cotton.

**10.** A storage-stable, concentrated, liquid dye formulation of a water-soluble reactive dye of formula

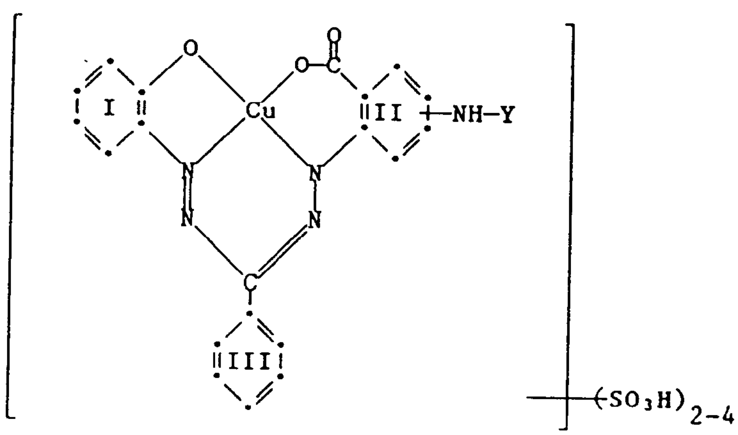

(1)

in which Y is a radical of formula

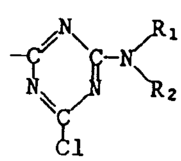

(2)

or

-CO-A-$SO_2$-X (3)

$R_1$ and $R_2$ are each independently of the other hydrogen or $C_{1-4}$alkyl substituted by halogen, cyano, $C_{1-4}$alkoxy, N,N-di-$C_{1-4}$alkylamino, hydroxyl, carboxyl, sulfo or sulfato; A is an unsubstituted or a substituted aliphatic or aromatic bridging group, and x is β-sulfatoethyl, β-thiosulfatoethyl, β-phosphatoethyl, β-acetoxyethyl, β-haloethyl or vinyl; the benzene radicals, I, II and III may contain further substituents in addition to 2 to 4 sulfo groups and, in the benzene radical II, to the radical -NH-Y; and the reactive dye of formula (1) contains only a single fibre-reactive radical.

## Revendications

**Revendications pour les Etats contractants suivants : BE, CH, DE, FR, GB, IT, LI**

1. Colorants réactifs de formule

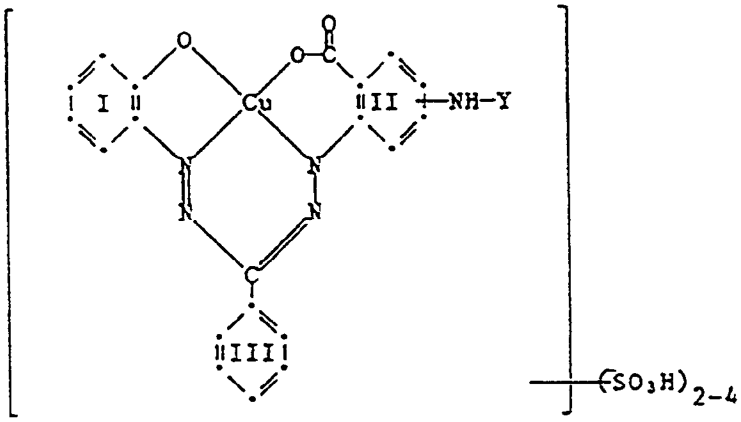

(1)

dans laquelle Y représente un reste de formule

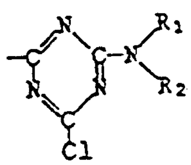

(2)

ou

-CO-A-$SO_2$-X (3)

$R_1$ et $R_2$ représentent, indépendamment l'un de l'autre, un atome d'hydrogène ou un groupe alkyle en $C_1$-$C_4$, à substituant(s) halogéno, cyano, alcoxy en $C_1$-$C_4$, N,N-di-(alkyl en $C_1$-$C_4$)amino, hydroxy, carboxy, sulfo ou sulfato,
A représente un chaînon pontant aromatique ou aliphatique, éventuellement substitué, et
X représente un groupe β-sulfatoéthyle, β-thiosulfatoéthyle, β-phosphatoéthyle, β-acyloxyéthyle, β-halogénoéthyle ou vinyle,
les noyaux benzéniques I, II et III, outre les 2 à 4 groupes sulfo et le reste -NH-Y présent sur le noyau benzénique II, peuvent porter d'autres substituants, et les colorants réactifs de formule (1) ne contiennent qu'un seul groupe réactif vis-à-vis des fibres.

2. Colorants réactifs selon la revendication 1, caractérisés en ce que Y représente un reste de formule
-CO-A-$SO_2$-$CH_2CH_2$-Cl (3a)
dans laquelle A représente un groupe n-propylène, phénylène ou endométhylène-cyclohexane-diyle.

3. Colorants réactifs selon la revendication 1, dans lesquels les noyaux benzéniques I, II et III ne portent pas d'autre substituant.

4. Colorants réactifs selon l'une des revendications 1 à 3, de formule

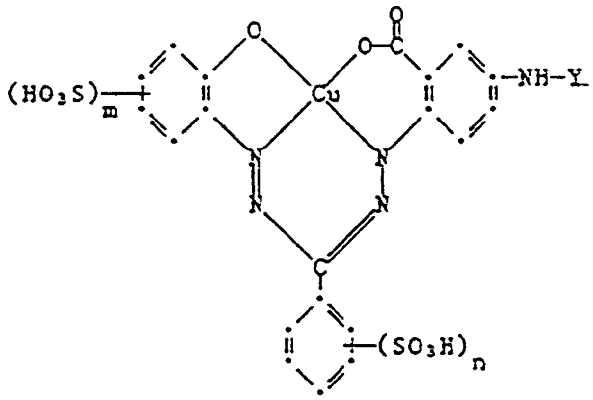

(4)

dans laquelle Y a la signification indiquée dans la revendication 1, m représente le nombre 1 ou 2 et n représente le nombre 0, 1 ou 2, m + n valant 2, 3 ou 4.

**5.** Colorants réactifs selon la revendication 1, de formule

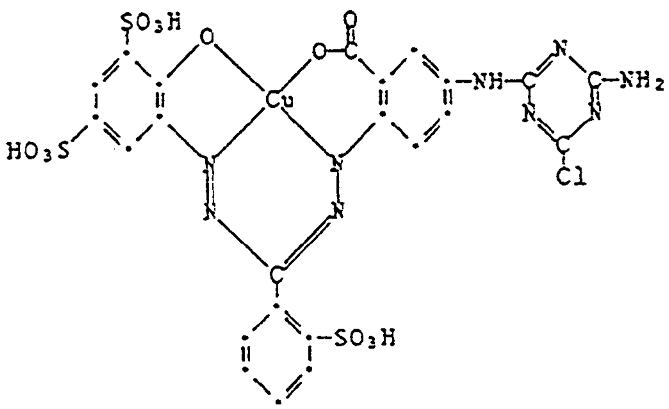

(6)

**6.** Colorants réactifs selon la revendication 1, de formule

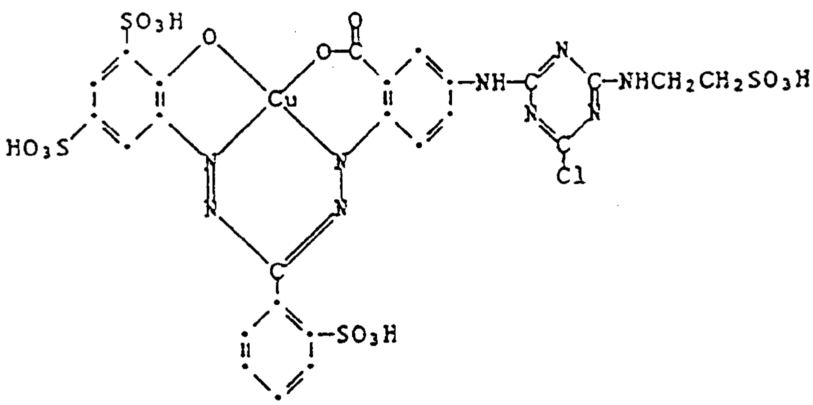

(7)

**7.** Procédé de préparation de colorants réactifs conformes à la revendication 1, caractérisé en ce que l'on condense un composé de formule

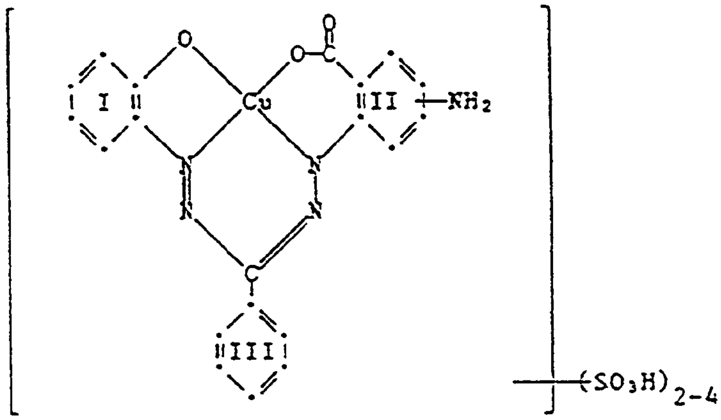

(8)

avec de la 2,4,6-trichloro-s-triazine, et l'on condense le produit de condensation primaire obtenu avec une amine de formule

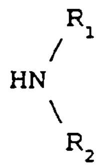

(9)

ou avec une 2-amino-4,6-dichloro-s-triazine, ou encore avec un halogénure d'acyle correspondant au reste de formule (3), et en ce que l'on effectue ensuite éventuellement d'autres réactions de conversion.

8. Utilisation des colorants réactifs conformes à la revendication 1, pour la teinture ou l'impression de matériaux fibreux cellulosiques.

9. Utilisation des colorants réactifs conformes à la revendication 1, pour la teinture ou l'impression du coton.

10. Préparations liquides, concentrées et stables au stockage, des colorants réactifs hydrosolubles conformes à la revendication 1.

**Revendications pour l'Etat contractant suivant : ES**

1. Procédé de préparation de colorants réactifs de formule

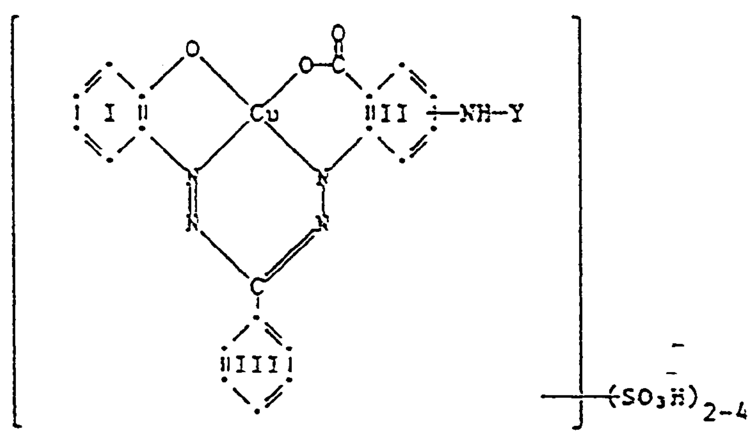

(1)

dans laquelle Y représente un reste de formule

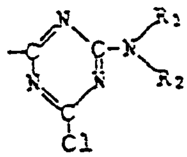

(2)

ou

-CO-A-$SO_2$-X (3)

$R_1$ et $R_2$ représentent, indépendamment l'un de l'autre, un atome d'hydrogène ou un groupe alkyle en $C_1$-$C_4$, à substituant(s) halogéno, cyano, alcoxy en $C_1$-$C_4$, N,N-di-(alkyl en $C_1$-$C_4$)amino, hydroxy, carboxy, sulfo ou sulfato,

A représente un chaînon pontant aromatique ou aliphatique, éventuellement substitué, et

X représente un groupe β-sulfatoéthyle, β-thiosulfatoéthyle, β-phosphatoéthyle, β-acyloxyéthyle, β-halogénoéthyle ou vinyle,

les noyaux benzéniques I, II et III, outre les 2 à 4 groupes sulfo et le reste -NH-Y présent sur le noyau benzénique II, peuvent porter d'autres substituants, et les colorants réactifs de formule (1) ne contiennent qu'un seul groupe réactif vis-à-vis des fibres,

ce procédé étant caractérisé en ce que l'on condense un composé de formule

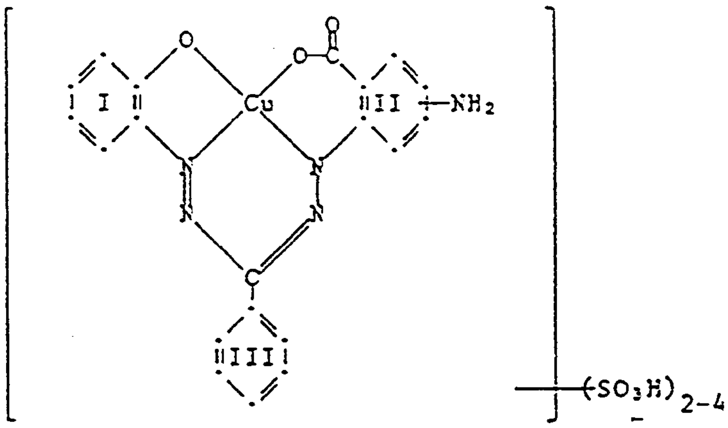

(8)

avec de la 2,4,6-trichloro-s-triazine, et l'on condense le produit de condensation primaire obtenu avec une amine de formule

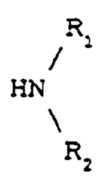

(9)

dans laquelle $R_1$ et $R_2$ ont les significations indiquées, ou avec une 2-amino-4,6-dichloro-s-triazine, ou bien avec un halogénure d'acyle correspondant au reste de formule (3), puis l'on effectue éventuellement d'autres réactions de conversion.

**2.** Procédé selon la revendication 1, caractérisé en ce que l'on utilise un halogénure d'acyle de formule

Hal-CO-A-$SO_2$-$CH_2CH_2Cl$ (10)

dans laquelle Hal représente un atome d'halogène et A représente un groupe n-propylène, phénylène ou endométhylène-cyclohexylène.

**3.** Procédé selon la revendication 1, caractérisé en ce que l'on utilise un composé de formule (8) dans lequel les noyaux benzéniques I, II et III ne portent pas d'autre substituant.

**4.** Procédé selon l'une quelconque des revendications 1 à 3, caractérisé en ce que l'on utilise un composé de

formule

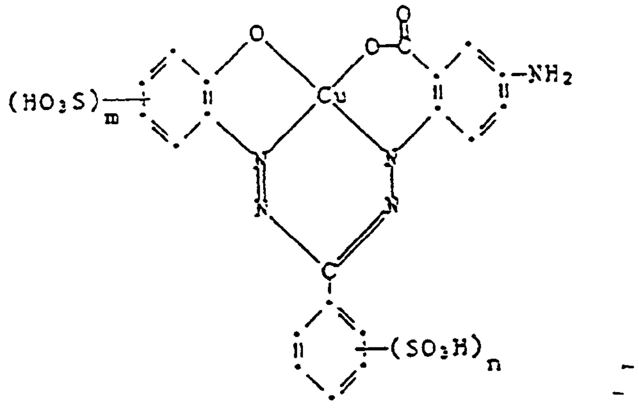

(11)

dans laquelle m représente le nombre 1 ou 2 et n représente le nombre 0, 1 ou 2, m + n valant 2, 3 ou 4.

5. Procédé selon la revendication 4, caractérisé en ce que l'on condense un composé de formule (11) avec de la 2,4,6-trichloro-s-triazine et l'on condense le produit de condensation primaire obtenu avec une amine de formule (9) ou avec une 2-amino-4,6-dichloro-s-triazine, le reste $-NR_1R_2$ représentant un groupe $-NH_2$, β-méthoxyéthylamino, γ-méthoxypropylamino, β-éthoxyéthylamino, N,N-diméthylamino, N,N-diéthylamino, β-chloroéthylamino, β-cyanoéthylamino, γ-cyanopropylamino, β-carboxyéthylamino, sulfométhylamino, β-sulfoéthylamino, N-méthyl-N-β-sulfoéthylamino, N-éthyl-N-β-sulfoéthylamino, β-hydroxyéthylamino, N,N-di-β-hydroxyéthylamino, β-sulfatoéthylamino, γ-hydroxypropylamino, 3-(N,N-di-méthylamino)-propylamino, carboxyméthylamino ou β-hydroxyéthylsulfonyléthoxyéthylamino.

6. Procédé selon la revendication 5, caractérisé en ce que l'on condense un composé de formule

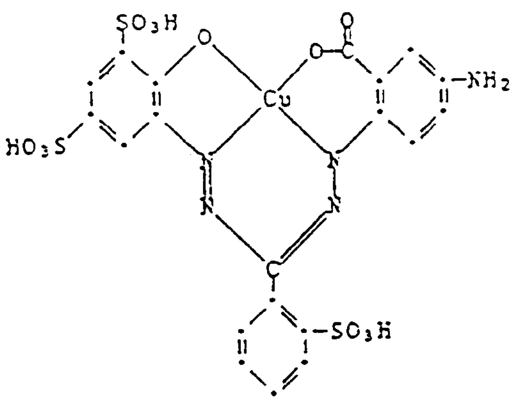

(12)

avec de la 2,4,6-trichloro-s-triazine et l'on condense le produit de condensation primaire obtenu avec de l'ammoniac ou avec de la 2-amino-4,6-dichloro-s-triazine.

7. Procédé selon la revendication 6, caractérisé en ce que l'on condense un composé de formule

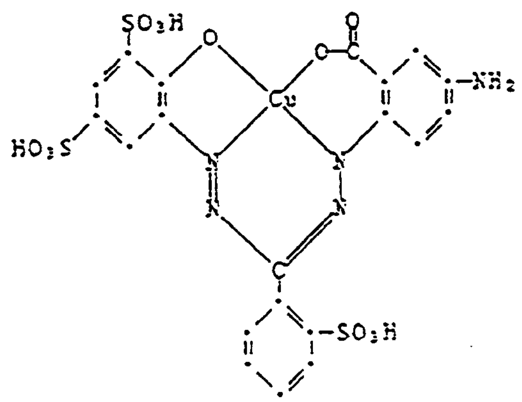

(12)

avec de la 2,4,6-trichloro-s-triazine et l'on condense le produit de condensation primaire obtenu avec de la β-sulfoéthylamine ou avec de la 2-(β-sulfoéthylamino)-4,6-dichloro-s-triazine.

**8.** Utilisation des colorants réactifs obtenus selon la revendication 1 pour la teinture ou l'impression de matériaux fibreux cellulosiques.

**9.** Utilisation selon la revendication 8, pour la teinture ou l'impression du coton.

**10.** Préparations liquides, concentrées et stables au stockage, de colorants réactifs hydrosolubles de formule

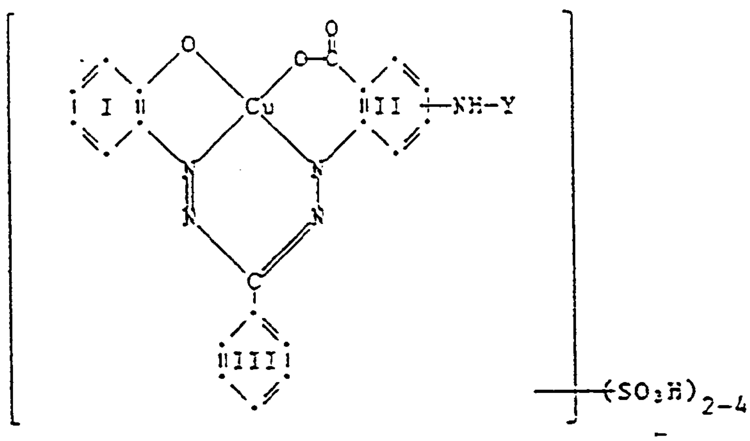

(1)

dans laquelle Y représente un reste de formule

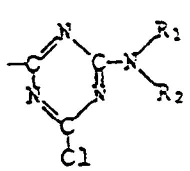

(2)

ou

$$-CO-A-SO_2-X \qquad (3)$$

$R_1$ et $R_2$ représentent, indépendamment l'un de l'autre, un atome d'hydrogène ou un groupe alkyle en $C_1$-$C_4$, à substituant(s) halogéno, cyano, alcoxy en $C_1$-$C_4$, N,N-di-(alkyl en $C_1$-$C_4$)amino, hydroxy, carboxy, sulfo ou sulfato,
A représente un chaînon pontant aromatique ou aliphatique, éventuellement substitué, et
X représente un groupe β-sulfatoéthyle, β-thiosulfatoéthyle, β-phosphatoéthyle, β-acyloxyéthyle, β-halogénoéthyle ou vinyle,
les noyaux benzéniques I, II et III, outre les 2 à 4 groupes sulfo et le reste -NH-Y présent sur le noyau benzénique II, peuvent porter d'autres substituants, et les colorants réactifs de formule (1) ne contiennent qu'un seul groupe réactif vis-à-vis des fibres.